# EUROPEAN PATENT APPLICATION

(11) **EP 2 490 120 A2**
(43) Date of publication of application: **22.08.2012**
(21) Application number: 12155222.8
(22) Date of filing: 13.02.2012
(51) Int. Cl.: G06F 3/12

(54) **Print control server and print control method**

(30) Priority: 15.02.2011 JP 2011029495
(71) Applicant: Seiko Epson Corporation, Shinjuku-ku Tokyo (JP)
(72) Inventor: Nakajo, Shoichi, Suwa-shi, Nagano 392-8502 (JP)
(74) Representative: Cloughley, Peter Andrew

(57) **Abstract**

A print control server includes a receiving unit that receives an email on an email address assigned to a specific printer; a determining unit that determines whether the email is a secondary email that is replied to or transferred, on the basis of an email including the email address in a destination, or is a primary email, not the secondary email; a print data creating unit that creates print data on the basis of the primary email; and a print data transmitting unit that transmits the print data to the specific printer.

## Description

The present invention relates to a print control server and a print control method, particularly, a cloud computing system that can print the text or an attached file of an email by transferring the email on an email address assigned to a printer.

A cloud computing system provided with a function of receiving an email and printing the text of an attached file of the email is known in the related art (for example, JP-A-2008-71257). The cloud computing system (hereafter, simply referred to as a printing system) is equipped with a server that creates print data corresponding to a specific printer on the basis of the text or an attached file of a specific email when receiving the specific email, and a printer that receives the print data from the server and performs printing. Therefore, a user of the printing system can use the printer registered in the printing system, even if a printer driver is not installed in a client terminal, such as a PC (Personal Computer) or a smartphone. In the printing system, when registering a printer on a server is performed, including assigning an email address for receiving a print target to the printer, any user who knows the email address can use the printer. The printing system is similar to a fax machine in that the transmitted information is printed, at the destination.

Some MTAs (Mail Transfer Agent), which are mail servers, are provided with automatic response or automatic transfer functions. It is assumed that a multiple-addressed email X having an email address Awith the automatic response function set available to "reply all" and an email address B assigned to a printer registered in a printing system, which are included in the destination, has arrived. In this case, the printing system receives the email X and an email Y automatically replied from the email address A. In this case, if printing is performed on the basis of the email Y, unintended and unnecessary printing is performed.

An advantage of some aspects of the invention is to control unnecessary printing based on an automatic reply or an automatically transferred email, in a cloud computing system that can print the text or an attached file of an email.

According to an aspect of the invention, a print control server includes: a receiving unit that receives an email on an email address assigned to a specific printer; a determining unit that determines whether the email is a secondary email that is a secondary email that is a predetermined email which has been at least replied to or transferred, or is a primary email, rather than a secondary email; a print data creating unit that creates print data on the basis of the primary email; and a print data transmitting unit that transmits the print data to the specific printer.

According to the aspect of the invention, the primary email sent to the email address assigned to a specific printer and the secondary email automatically replied to or transferred on the basis of the primary email are discriminated, such that the primary email is printed. Therefore, it is possible to suppress unnecessary printing from being performed on the basis of the email automatically replied to or automatically transferred. Therefore, it is possible to print information on a plurality of printers by suppressing waste based on a multiple-addressed email. Further, the emails replied to or transferred may not be considered as a secondary email. It may be possible to perform determining a secondary email by using other conditions, in addition to the conditions of whether a reply or transfer has been made.

In the print control server, the print data creating unit need not create print data based on the secondary email.

The print control server may further include a storage unit that stores identification information of the primary email, in which the determining unit may determine a subsequent email including the identification information as the secondary email and may determine a subsequent email not including the identification information is the primary email.

It is possible to easily specify automatically replied to or automatically transferred secondary email by specifying a secondary email on the basis of the identification information of the primary email.

It is preferable to manually handle an email on the email address assigned to a specific printer as a primary email, that is, without invalidating an email which has been intentionally replied to or transferred.

In the print control server, the determining unit may determine an email, in which the time from reception to reply or transfer exceeds a predetermined time, in the emails replied to or transferred on the basis of an email including the email address in a destination, as the primary email, and may determine an email, in which the time from reception to reply or transfer is within the predetermined time, as the secondary email.

The secondary email automatically replied to or automatically transferred by a mail server is directly transferred when the mail server receives an email. Therefore, it is possible to discriminate the email manually transferred from an email automatically replied to or automatically transferred by the MTA, on the basis of the time from reception to reply or transfer.

In the print control server, the determining unit may determine whether the email is the primary email or the secondary email on the basis of the matter of the text of the email on the email address.

">" or a tab may be inserted in each line in the email automatically replied to or automatically transferred by the MTA. Further, the text of the email automatically replied to or automatically transferred by the mail server has a strong relation to the text of the original email. Therefore, it is possible to discriminate the email manually sent from the email automatically replied to or automatically transferred by the mail server, on the basis of the text of the email.

Further, the functions of the units of the aspect may be implemented by hardware resources of which the functions are specified by the configurations, hardware resources of which the functions are specified by programs, or the combination of these hardware resources. Further, implementing the functions of the units is not limited to physically independent hardware resources. Further, the server need not be implemented only by one computer and the print control server may be implemented by incorporation of a plurality of computers. Further, a printer that performs printing based on print data received from the print control server or a printing system composed of the print control server and the printer may be provided. Further, the invention may provide a method, a computer program that implements the functions of a server or a printer, and a program recording medium. Obviously, the recording medium of a computer may be a magnetic recording medium, a magneto optical recording medium, or any recording medium that may be developed in the future.

Embodiments of the invention will now be described by way of example only with reference to the accompanying drawings, wherein like numbers reference like elements.

Fig. 1 is a block diagram showing a printing system.

Fig. 2A is a block diagram showing the configuration of a server and Fig. 2B is a block diagram showing the configuration of a printer.

Fig. 3 is a sequence diagram showing a setup sequence.

Fig. 4 is a sequence diagram showing a login sequence.

Fig. 5 is a sequence diagram showing a printing sequence.

Hereinafter, embodiments of the invention will be described with reference to the accompanying drawings. Like components in the drawings are designated by like reference numerals to avoid repeated description.

### 1. Configuration

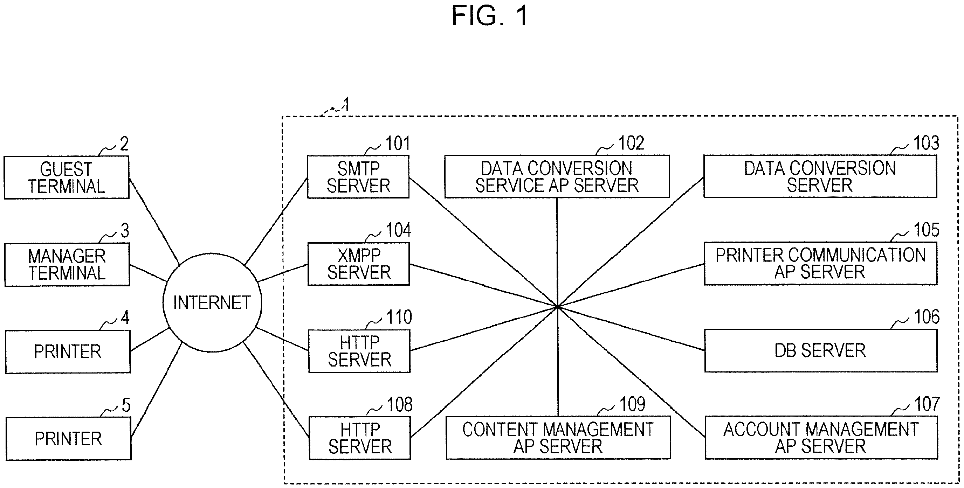

Fig. 1 is a block diagram showing a printing system of an embodiment of the invention. A printing system is a cloud computing system that can print the text or an attached file of an email by transferring the email to email addresses matched to registered printers 4 and 5, and includes a print control server 1 and a plurality of printers 4 and 5.

The print control server 1 includes an SMTP server 101, a data conversion service application (AP) server 102, a data conversion server 103, an XMPP server 104, a printer communication AP server 105, a DB server 106, an account management AP server 107, an HTTP server 108, a content management AP server 109, and an HTTP server 110.

The SMTP server 101 is a server having a function of transferring/receiving an email on the email addresses assigned to the registered printers 4 and 5.

The data conversion service AP server 102, a determining unit, is an application server having a function of determining whether an email that the SMTP server 101 receives is a primary email or a secondary email, extracting the text and an attached file from the primary email, and transmitting the text and the attached file as print targets to the data conversion server 103.

The data conversion server 103, a print data creating unit, is a server having a function of converting the file taken from the data conversion AP server 102 into print data.

The DB server 106 is a database server that stores the print data while managing a variety of information of the printers 4 and 5.

The XMPP server 104 is a server having a function of communicating with the printers 4 and 5 by using XMPP.

The printer communication AP server 105 is an application server that connects the XMPP server 104 with another server.

The account management AP server 107 is an application server that connects the HTTP server 110 with another server.

The HTTP server 110 is a server having a function of communicating with a guest terminal 2 and a manager terminal 3 by using HTTP.

The content management AP server 109 is an application server that connects the HTTP server 108 with another server.

The HTTP server 108 is a server having a function of communicating with the printers 4 and 5 by using HTTP.

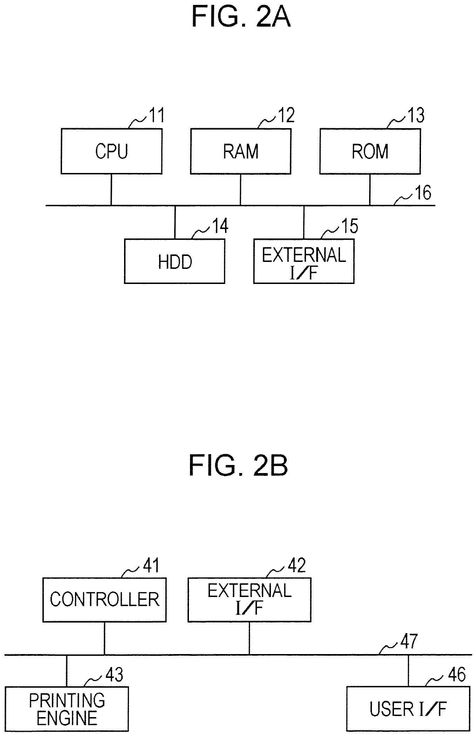

Each of the SMTP server 101, data conversion service application (AP) server 102, data conversion server 103, XMPP server 104, printer communication AP server 105, DB server 106, account management AP server 107, HTTP server 108, content management AP server 109, and HTTP server 110, as shown in Fig. 2A, includes a CPU 11, a RAM 12, a ROM 13, a hard disk device (HDD) 14, an external interface (I/F) 15, and an internal interface (I/F) 16 connecting these devices. A start program is stored in the ROM 13. An operating system (OS) or programs for implementing the functions described above are stored on the HDD 14. The programs are loaded in the RAM 12 and executed by the CPU 11. The external I/F 15 is an interface for connection with another server, the printers 4 and 5, the guest terminal 2, or the manager terminal 3 through the Internet, or an interface for connection with peripheral devices.

The printers 4 and 5, as shown in Fig. 2B, each are equipped with an internal I/F 47 connecting a controller 41, an external I/F 42, a user I/F 46, and a print engine 43. The controller 41 is implemented by a CPU, a nonvolatile memory, a RAM, of an ASIC and performs a process for controlling the operation of the print engine 43 by executing the print program stored in the nonvolatile memory. Further, the controller 41 performs a process for registering the printers 4 and 5 on the print control server 1 or acquires print data from the print control server 1 in communication with the manager terminal 3 or the print control server 1 by executing a web service program stored in the nonvolatile memory. The print engine 43 includes an actuator, a sensor, a driving circuit, or a mechanical part for performing printing in a common printing method, such as an ink jet type or a laser type. The external I/F 42 includes an interface for connection with the print control server 1 or the manager terminal 3 through the Internet. The user I/F 46 is an operation panel implemented by a display or operation keys.

### 2-1. Setup Sequence

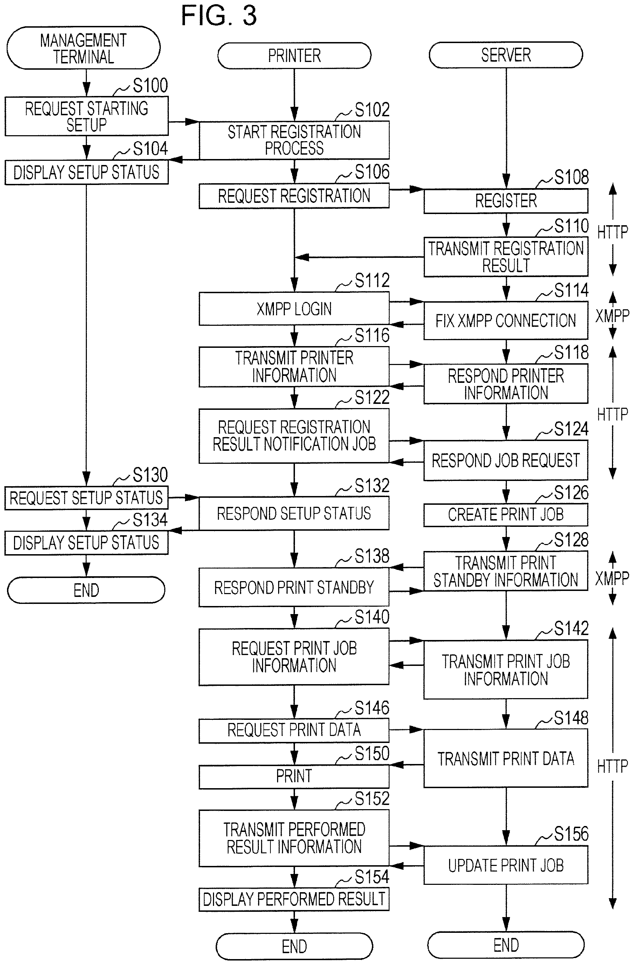

The printers 4 and 5 are joined in the printing system by being registered on the print control server 1 and can perform printing in response to a primary email that the print control server 1 receives as a printing request. Fig. 3 is a diagram showing a setup sequence for registering the printers 4 and 5 on the print control server 1. An example of registering the printer 4 on the print control server 1 by operating the manager terminal 3, which is a PC (Personal Computer) that the owner of the printer 4 has is described in the embodiment.

First, the manager terminal 3 that executes a web browser or the like transmits a request for starting setup to the printer 4 in communication with the printer 4 through HTTP (S100).

The printer 4 receiving the request for starting setup starts a registration process and transmits the registration status information to the manager terminal 3 through HTTP (S102).

The manager terminal 3 receiving the registration status information displays the setup status on the basis of the received registration status information (S104). In this process, for example, a text or an image showing that setup is in progress is displayed on a screen of the manager terminal 3 by a browser.

The printer 4 transmitting the registration status information in accordance with the request of starting setup transmits the unique model ID of the printer 4, the serial number of the printer 4, and a deletion flag of existing information, as a registration request corresponding to the printer 4, to the URL of the HTTP server 108 corresponding to the registration request through HTTP (S106).

The print control server 1 acquiring the registration request through HTTP server 108 registers the printer 4 on the print control server 1 as an output device of the printing system on the basis of the registration request (S108).

In detail, the account management AP server 107 acquiring the parameter of a registration request from the HTTP server 108 assigns an internal ID, an XMPP login password, the URL of a management page, a management page password, and an email address, which correspond to the unique model ID and serial number of the printer 4, to the printer 4 while referring to the registration information of other printers that have been registered on the DB server 106. Since the internal ID is assigned on the basis of the unique model ID and the serial number of the printer 4, it is possible to reliably assign a different internal ID to each printer, even if serial numbers are assigned to the printers using different systems for the models to the printer 4. The management page is a web page for editing the information stored in the DB server 106 through HTTP.

The account management AP server 107 stores the XMPP login password, the URL of the management page, the management page password, and the email address to the DB server 106 as the registration information of the printer 4 by matching them with the unique model ID and the internal ID corresponding to the unique model ID and the serial number of the printer 4.

Further, the account management AP server 107 registers the email address assigned to the printer 4 on the SMTP server 101. As the email address assigned to the printer 4 is registered on the SMTP server 101, the print control server 1 can receive an email saying that the printer 4 is an output device.

Further, the account management AP server 107 matches and registers the internal ID assigned to the printer 4 and the XMPP login password to the XMPP server 104. An XMPP JID for the XMPP server 101 to communicate with the printer 4 through XMPP becomes "internal ID "@" XMPP domain name of the XMPP server 104". As the internal ID of the printer 4 and the XMPP login password are registered on the XMPP server 104 as the XMPP connection information, the printer 4 and the print control server 1 can communicate through XMPP.

The account management AP server 107 registering the printer 4 on the print control server 1 as an output device of the printing system transmits the registration result information of the printer 4 to the printer 4, which is the source of a registration request, through the HTTP server 108 (S110). The registration result information includes the internal ID assigned to the printer 4, the XMPP login password, the URL of the management page, the management page password, the email address, the domain of the XMPP server 104, and whether to succeed in receiving the registration request (success/failure). Further, when the print control server 1 is provided with a plurality of XMPP servers for load distribution, it is necessary to notify the printer 4 of the domain names of the XMPP servers assigned to the printer 4, but when the XMPP servers that all of printers registered on the print control server 1 are shared, it is not necessary to notify the printer 4 of the domain names of the XMPP servers.

The printer 4 that has acquired the registration result information from the HTTP server 108 creates an XMPP JID from the internal ID and the XMPP domain name while storing the internal ID assigned to the printer 4, the XMPP login password, the URL of the management page, the management page password, the email address, and the domain name of the XMPP server 104, and transmits the XMPP JID and the XMPP login password to the XMPP server 104 as the XMPP connection information (S112).

The XMPP server 104 acquiring the XMPP JID and the XMPP login password from the printer 4 establishes XMPP connection with the printer 4 and transmits the XMPP connection result (success/failure) to the printer 4 (S114). When the XMPP connection succeeds, the XMPP connection between the printer 4 and the XMPP server 104 is kept until power for the printer 4 is cut.

When the XMPP connection with the print control server 1 is established, the printer 4 transmits the printer information to the HTTP server 108 (S116). The printer information includes the internal ID assigned to the printer 4, the version of communication specifications, the menu type information (destination information) of the printer, the sub-menu type information (destination information) of the printer, and the language information of the printer and is transmitted to the URL of the HTTP server 108 corresponding to the printer information through HTTP.

When the HTTP server 108 receives the printer information from the printer 4, the content management AP server 109 matches the printer information with the internal ID and stores the printer information to the DB server 106, and transmits the reception result (success/failure) to the printer 4 that is the source (S118). The printer information of the printer 4 is stored in the DB server 106 until the XMPP connection with the printer 4 is cut.

The printer 4 receiving the reception result (success) of the printer information transmits a request for making a registration result notification job to the HTTP server 108 (S122). The registration result notification job is a print job for printing the matter of registering the printer 4 on the print control server 1 with the printer 4. In detail, the internal ID is transmitted to the URL of the HTTP server 108 corresponding to the request for making a registration result notification job as a request for making a registration result notification job.

The HTTP server 108 receiving the request for making a registration result notification job transmits the reception result (success/failure) to the printer 4 that is the source (S124).

When the reception result (success) of the request for making a registration result notification job is received from the HTTP server 108, the print control server 1 creates a registration result notification job for the printer 4 to print a registration report (S126). The detail is as the following. First, the content management AP server 109 acquires the internal ID of the printer 4 from the request for making a registration result job, acquires the information to be notified to the user of the manager terminal 3, such as the URL of the management page, the management page password, and the email address, which are stored in association with the acquired internal ID, and the unique model ID of the printer 4 which is stored in connection with the internal ID, from the DB server 106, and transmits them to the printer communication AP server 105. Subsequently, the printer communication AP server 105 requests the data conversion service AP server 102 to create print data for printing the information to be notified to the user of the manager terminal 3 as the registration report with the printer 4, to be matched with a job ID and a model ID. The data conversion AP server 102 receiving the request creates print data corresponding to the unique model ID to the data conversion server 103. Next, the printer communication AP server 105 acquires the print data from the data conversion server 103 and stores the print data to the DB server 106 in association with the internal ID and the job ID, as a print job of the printer 4.

The print control server 1 creating the registration result notification job notifies the printer 4, which is the source, of the creation of a new print job through XMPP (S128). In detail, the printer communication AP server 105 notifies the printer 4 of print standby information saying that a new print job of the printer 4 is created, through the XMPP server 104. In this process, the XMPP server 104 specifies the counterpart of XMPP communication to the printer 4 on the basis of the internal ID acquired from the printer communication AP server 105 and transmits the print standby information to the printer 4 through XMPP.

The printer 4 acquiring the print standby information transmits the reception result (success/failure) to the XMPP server 104 through XMPP (S138).

Subsequently, the printer 4 requests print job information for acquiring print data from the print control server 1 (S140). In detail, the printer 4 transmits the internal ID of the printer 4 to the URL of the HTTP server 108 corresponding to the request of the print job through HTTP.

The print control server 1 receiving the request for the print job information transmits the reception result (success/failure), the job ID, the URL of the HTTP server 108 which corresponds to the job ID, and the page description language of the print data, as the print job information, to the printer 4 (S142). In detail, the content management AP server 109 acquires the internal ID that the HTTP server 108 acquires as the request for the print job information, acquires the job ID, the print data, and the page description language of the print data, which are stored in association with the internal ID, from the DB server 106, and transmits them to the HTTP server 108. The HTTP server 108 creates a URL to receive a request for acquiring the print data corresponding to the job ID, and transmits the reception result (success/failure), the job ID, the URL for receiving the request for acquiring the print data, and the kind of the page description language of the print data, as print job information, to the printer 4 through HTTP.

The printer 4 acquiring the print job information stands by so that the printer 4 enters an idle state, and requests the print data when an idle state is made (S146). In detail, the printer transmits the internal ID of the printer 4, as a request of acquiring the print data, to the URL of the HTTP server 108 for receiving the request for acquiring the print data, through HTTP.

The print control server 1 transmits the reception result (success/failure) and the requested print data to the printer 4 through HTTP (S148). In detail, the HTTP server 108 transmits the print data corresponding to the URL for receiving the request of the print data and the reception result to the printer 4 through HTTP.

The printer 4 acquiring the print data prints a registration report on the basis of the print data (S150).

The printer 4 that finishes printing transmits the performance result to the HTTP server 108 (S152) and displays the performance result(S154). In detail, the printer 4 transmits the internal ID of the printer 4, the job ID of the printing, the performance result of the print job (success/failure), and a reason of the performance result (normal, jamming of paper, out of ink) to the URL corresponding to the performance result information of the HTTP server 108 (S152).

The print control server 1 acquiring the performance result information from the HTTP server 108 updates the print job on the basis of the performance result information (S156). In detail, the HTTP server 108 transmits the reception result (success/failure) of the performance result information to the printer 4, and the content management AP server 109 deletes the print data corresponding to the job ID from the DB server 106 on the basis of the performance result information that the HTTP server 108 receives.

While the setup sequence is performed, the manager terminal 3 transmitting the request of starting setup periodically requests the setup status to the printer 4 (S130). In detail, the manager terminal 3 transmits a request for the setup status to the URL of the printer 4 which corresponds to the request of a setup status.

The printer 4 receiving the request of a setup status transmits the registration status information to the manager terminal 3 through HTTP (S132). The registration status information is the same as that which the printer 4 transmits to the manager terminal 3 in S102 right after acquiring the request of starting setup.

The manager terminal 3 receiving the registration status information, similar to S104, displays the registration status on the basis of the received registration status information (S134). When the printer 4 has been registered on the print control server 1, for example, the URL of the management page, the management page password, and the email address are displayed on the screen of the manager terminal 3.

### 2-2. Login Sequence

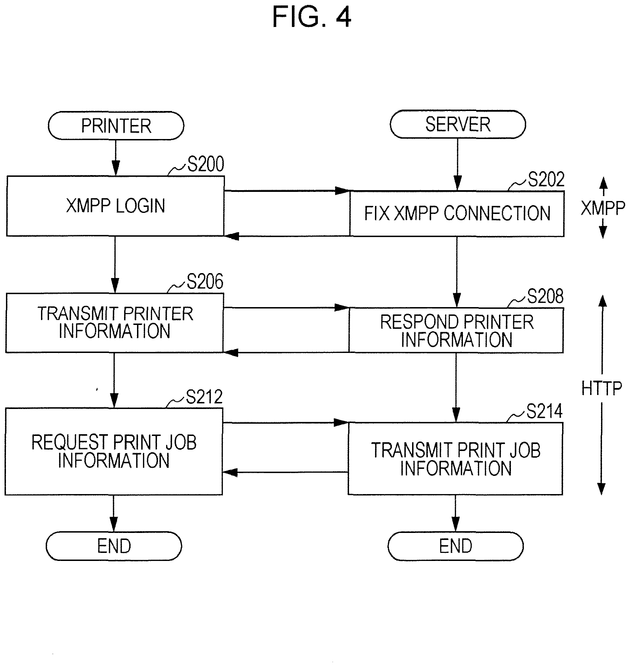

Fig. 4 is a diagram showing a login sequence. The login sequence is started when the user cuts the power by pressing a power button of the printer 4 and again presses the power button to supply power, after the setup sequence is finished. In the login sequence, the printer 4 initializes the parts and establishes XMPP connection with the print control server 1, thereby checking a print job.

In detail, similar to S112 of the setup sequence, the printer 4 transmits XMPP connection information to the XMPP server 104 (S200). The XMPP server 104 acquiring the XMPP connection information establishes XMPP connection similar to S114 (S202).

The printer 4 establishing the XMPP connection with the print control server 1 transmits the printer information to the print control server 1 through HTTP, similar to S116 of the setup sequence (S206). That is, the printer information is transmitted every time the XMPP connection with the print control server 1 is established. The server acquiring the printer information stores the printer information and transmits the reception result to the printer 4 through HTTP until the XMPP connection is cut, similar to S118 (S208).

The printer 4 transmitting the printer information to the print control server 1 requests print job information from the print control server 1 through HTTP, similar to S140 of the setup sequence (S212). The print control server 1 acquiring the request for print job information transmits the print job information to the printer 4 through HTTP, similar to S142 (S214). The printer 4 acquiring the print job information requests print data and performs printing when there is a print job. As described above, since the printer 4 automatically acquires print job information after power is supplied, the printer 4 can perform the print job created in the print control server 1 while power is cut, right after power is supplied.

### 2-3. Print Sequence

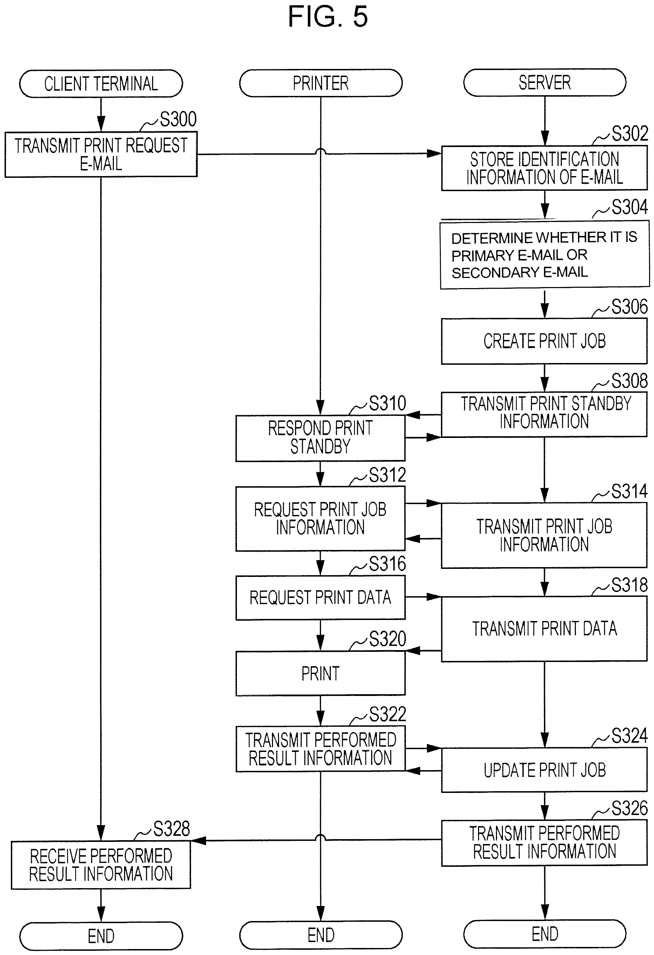

Fig. 5 is a diagram showing a print sequence. The print sequence is started, when the manager terminal 3 or the guest terminal 2 sends an email to the email address assigned to the registered printer (S300). The print control server 1, as described below, processes the text or an attached file of a primary email received at the registered email address, as a print target. The destination email addresses that are different for each printer are, as described above, displayed on the screen of the manager terminal 3 or printed by the printer 4 in accordance with the setup sequence. Therefore, the management user who registers the printer 4 on the print control server 1 with the manager terminal 3 and a guest user who is notified of the email address by a management user can transmit a print request for the printer 4 to the print control server 1, using a predetermined terminal connected to the Internet. It is assumed in the following description that an email for a print request is transferred using an email address corresponding to the printer 4 from the guest terminal 2.

When receiving an email, the print control server 1 analyzes the header and stores a unique identifier for the received email (S302). In detail, when the SMTP server 101 receives an email at the registered email address, the data conversion service AP server 102 acquires a "Message-ID (hereafter, referred to as an MID), an "In-Reply-To" (hereafter, referred to as an IRT), and a "Reference" (hereafter, referred to as an RFR), which are defined in the RFC, as the identification information of the email. The MID, IRT, and RFR are identifiers for identifying the address of the email and written in the header of the email by an MUA (Mail User Agent) that creates an email. When the MUA creates an email, in detail, a unique MID is written in the header of the email. Further, in general, when an email B is a reply of an email A, the MID of the email A is written in the IRT of the email B. Further, when an email C is a transfer (forwarding) of the email A, the MID of the email A is written in the RFR of the email C. Therefore, the SMTP server 101 stores the MID in the DB server 106, as a unique identifier, in the received email.

Next, the data conversion service AP server 102 determines whether an email is a primary email or a secondary email on the basis of the IRT and RFR acquired from the header of the email (S304). In the embodiment, emails where the MID of emails received before is written in the IRT or the RFR are determined as secondary email and other emails are determined as primary emails. The data conversion AP server 102 searches whether the IRT or the RFR acquired from the header of the received email is stored in the DB server 106. When the IRT or the RFR acquired from the header of the received email is stored in the DB server 106, the email is determined as a secondary email, or when the IRT or the RFR is not acquired from the header of the received email and when the IRT or the RFR acquired from the header of the received email is not stored in the DB server 106, the email is determined as a primary email.

Next, the print control server 1 creates print data on the basis of the primary email (S306). First, the printer communication AP server 105 assigns an internal ID and a job ID to each file, with the text and an attached file of the email as print targets. The internal ID is specified by the email address. Next, the print communication AP server 105 transmits the print targets to the data conversion server 103, together with the internal ID and the job ID and creates print data in accordance with the model on the basis of the print targets. The printer communication AP server 105 stores the print data in the DB server 106, as a print job of the printer 4, by associating the print data with the internal ID and the job ID of the printer 4. Further, the secondary email does nothing and only the history is left.

Next, the print control server 1 transmits print standby information to the printer 4 and optionally the guest terminal 2, which is the source of the print request, through XMPP (S308). In detail, the printer communication AP server 105 notifies the printer 4 of the print standby information through XMPP, similar to S128 of the setup sequence. Accordingly, the process until the print standby information is transmitted to the printer 4 after the print request can be freely performed by the print control server 1, because the print standby information is transmitted through XMPP, such that polling from the printer 4 is not necessary. Therefore, it is possible to immediately notify the printer 4 of the creation of the print job, such that it is possible to notify the printer 4 of the creation of the print job with the minimum amount of communication.

The printer 4 acquiring the print standby information, similar to S138 of the setup sequence, transmits a reception result (success/failure) to the XMPP server 104 through XMPP (S310).

Subsequently, similar to S140, the printer 4 requests print job information for acquiring print data from the print control server 1, through HTTP (S312). In detail, the printer 4 transmits the internal ID of the printer 4 to the URL of the HTTP server 108 corresponding to the request for the print job through HTTP.

The print control server 1 receiving the request for the print job information, similar to S142, transmits the reception result (success/failure), the job ID, the URL of the HTTP server 108 which corresponds to the job ID, and the page description language of the print job, as the print job information, to the printer 4 through HTTP (S314).

The printer 4 acquiring the print job information, similar to S146, waits for the printer 4 to enter an idle state, and when an idle state is attained, the printer 4 requests transmission of the print data by transmitting the URL for receiving the request for acquiring the print data to the HTTP server 108 (S316).

The HTTP server 108 requested to transmit the print data, similar to S148, transmits the reception result (success/failure) and the print data matched with the URL for receiving the request for acquiring the print data to the printer 4 through HTTP (S318).

The printer 4 acquiring the print data, similar to S150, performs printing on the basis of the print data (S320).

The printer 4 that finishes printing, similar to S154, transmits the performance result of the print job to the HTTP server 108 (S322).

The print control server 1 acquiring the performance result information from the HTTP server 108, similar to S156, updates the print job on the basis of the performance result information (S324).

Next, the print control server 1 transmits the performance result (success/failure) of the print request to the guest terminal 2, which is the source of the print request, by using an email (S326). In detail, the content management AP server 109 creates an email of which the text says that printing is finished or failed on the basis of the performance result information and the print target that has finished being printed or failed to be printed and of which the destination is the guest terminal 2, which is the source of the print request, and then transfers the created email to the guest terminal 2 through the SMTP server 11. Further, for the secondary email, the result is not notified to the guest terminal 2 that is the source of the print request. Accordingly, infinite transferring and receiving of emails is prevented, even if the guest terminal 2 automatically replies.

When the guest terminal 2 receives the email (S328), the user of the guest terminal 2 can know the process result of the print request.

The print control server 1 described above processes, as a print request, only the primary email in which the MID of emails received before is not written in the IRT or the RFR, in the emails transferred to the email address assigned to the printer registered in the printing system. If the secondary email is processed as the print request, the following problems occur.

It is assumed that a user Y makes the automatic reply function of the MTA available in their absence. A user X of the guest terminal 2 then makes the printer 4 perform printing by transferring an email A and notifies the user Y of the print matter by transmitting a CC of the email A to the user Y When the user Y sets the destination of the automatic reply to "reply all", an email B automatically created on the basis of the email A by the MTA is transferred to the email address of the user X and the email address for making the printer 4 perform printing. Accordingly, the printer control server 1 receives the email A transferred by the user X and the email B transferred by automatic reply of the MTA, such that when even the secondary email is processed as a print request, the printer 4 performs unnecessary printing that the user does not intend, on the basis of the email B. The unintended printing may occur when the automatic reply of the MTA is set available. In order to prevent the unintended printing when even the secondary email is processed as a print request, it may possible to consider a method that does not process an email in which a plurality of destinations are set, as a print request, in the print control sever 1. However, when the method that does not process an email in which a plurality of destinations is set, as a print request, in the print control sever 1, it is necessary for the user to sequentially transfer as many emails as the number of printer destinations in order to allow the printers to print the same matter, which is inconvenient.

For the inconvenience, according to the embodiment, since the MID of the email A is stored in the print control server 1, when the print control server 1 receives the email B, the email B is determined as a secondary email and printing based on the email B is not performed. Therefore, unintended and unnecessary printing is not performed, even if there is an email with a plurality of destinations as a print request. That is, the user can allow a plurality of printers to print information without waste based on a multiple-addressed email, by using the print control server 1 of the embodiment.

### 3. Other Embodiments

The scope of the invention is not limited to the embodiment described above and may be modified in various ways without departing from the scope of the invention. The following modified examples or combination of them, and combination of the modified examples and the embodiment describe above are included in the scope of the invention.

For example, although the secondary email is excepted from a print request on the basis of the IRT and the RFR of an email in the embodiment, it may be possible to process an email, which is manually replied to or manually transferred after a user additionally writes characters to print, as a primary email. In this case, it is assumed that the user transferred the email to be printed, and it is preferably printed as a primary email.

In detail, even if an email Y in which the MID of the email X received before is included in the IRF or the RFR is received, the print control server 1 may determine the email Y is a primary email, when the time until the email Y is replied to or otherwise transferred (e.g. forwarded) on the basis of the email X from the reception of the email X exceeds a predetermined time. As the transfer time or the reception time of an email is stored together with the MID every time the print control server 1 receives an email, it is possible to estimate the transfer time or the difference of transfer times of two emails in which a common MID is included in the header. When the difference in the transfer time or the reception times exceeds a predetermined time, even an email in which the MID acquired before is included in the IRT or the RFR may be processed as a primary email. Accordingly, it is possible to make the printers 4 and 5, which are registered on the print control server 1, perform printing, even if transferring an email by manual reply or other manual transfer, such as forwarding. For an email automatically replied to or otherwise automatically transferred, the difference between the transfer time and the reception time of the original email is very small. By contrast, the difference between the transfer time and the reception time of the original email is large, in an email with characters written by a user to print which is manually replied to or manually transferred. In the case of an automatic transfer, the transfer time and the reception time are substantially the same. Thus, such that when the difference between the transfer time and the reception time of two received emails exceeds a predetermined time, the print control server 1 may process both emails as primary emails, as a print request.

Further, when an email received before and the text that is the print target is less related, the print control server 1 may process an email as a primary email of a print request, regardless of whether the MID of the email received before is included in the IRT or the RFR. As the text of an email is stored together with the MID every time the print control server 1 receives an email, the print control server 1 can compare the texts of two emails in which a common MID is included in the header.

Further, even for an email in which the MID of an email received before is included in the IRT or the RFR, the print control server 1 may process the email as a primary email of a print request, when the difference in the text of the received email from the text of the email received before does not exceed a predetermined pattern or when a large amount of other characters are included in the difference even if the difference includes a predetermined pattern. For automatic reply or automatic transfer, for example, ">" or a tab is inserted in each line. It is possible to determine whether the email is automatic reply or automatic transfer, on the basis of comparison of a threshold value and the difference from the email received before other than the pattern registered in the text of the email, by registering the pattern of typical characters or symbols that are automatically put in the text on the print control server 1, for automatic reply or automatic transfer. The print control server 1 may determine whether it is a primary mail on the basis of the matter of the text, even if the MID of an email received before is not included in the IRT or the RFR, because the MUA creating an email may not attach the MID. Further, when the portions that are the difference from the text of an email received before and characters other than a predetermined pattern, such as ">" or a tab, are more than a predetermined number of characters, it is determined that the user puts in the characters to print and the email is determined as a primary email.

Further, even for an email that is repeatedly replied and transferred, such as a reply of transfer, transfer of transfer, and transfer of reply of an email, it is preferable to determine the email is a secondary email, but the email may be determined as a primary email. For example, similar to the embodiment described above, when the MID of a secondary mail is stored, a reply to the secondary email may also be determined as a secondary email, but it may be possible to determine a reply to the secondary email as a primary email by storing the MID of the secondary email.

Further, it may be possible to take user settings of the printer 4 and perform determination on the basis of the setting, when determining whether to print a secondary email or whether to determine an email in which a determination method, or reply and transfer are repeated as a secondary email.

Further, although it is exemplified in the embodiment that the printer 4 automatically performs a print job when receiving print standby information from the print control server 1, for example, it may be possible to display the information showing the existence of a print job on the user I/F 46 of the printer 4 receiving the print standby information and make the printer 4 await confirmation of the print job by the user before performing the print job.

Further, although it is exemplified in the embodiment that the print control server 1 is composed of a plurality of physically independent computers, it may be possible to implement the function of the print control server 1 with one computer.

Further, it may be possible to combine the embodiments.

## Claims

1. A print control server (1) comprising:
a receiving unit (108) arranged to receive an email at an email address assigned to a specific printer (4, 5);
a determining unit (102) arranged to determine whether the email is a secondary email that is a predetermined email which has been at least replied to or transferred, or is a primary email, rather than a secondary email;
a print data creating unit (103) arranged to create print data on the basis of the primary email; and
a print data transmitting unit (108) arranged to transmit the print data to the specific printer.

2. The print control server according to Claim 1,
wherein the print data creating unit is not arranged to create printer data based on the secondary email.

3. The print control server according to Claim 1 or Claim 2, further comprising:
a storage unit (106) arranged to store identification information (MID) of the primary email,
wherein the determining unit is arranged to determine a subsequent email including the identification information as the secondary email and determine a subsequent email not including the identification information as the primary email.

4. The print control server according to any one of the preceding claims,
wherein the determining unit is arranged to determine an email, in which the time from reception to reply or transfer exceeds a predetermined time, among the emails replied to or transferred and including the same email address, as the primary email, and to determine an email, in which the time from reception to reply or transfer is within the predetermined time, as the secondary email.

5. The print control server according to any one of the preceding claims,
wherein the determining unit is arranged to determine whether the email is the primary email or the secondary email on the basis of the text of the email sent to the email address.

6. A print control method comprising:
receiving an email at an email address assigned to a specific printer;
determining whether the email is a secondary email that is a predetermined email at least replied to or transferred, or is a primary email, not the secondary email;
creating print data on the basis of the primary email; and
transmitting the print data to the specific printer.

7. A printer (4, 5) comprising:
a receiving unit (42) arranged to receive print data from a print control server (1) according to any one of the preceding claims; and
a printing unit (43) arranged to perform printing on the basis of the received print data.
